# EUROPEAN PATENT SPECIFICATION

(11) **EP 2 846 501 B1**
(45) Date of publication and mention of the grant of the patent: **09.08.2017**
(21) Application number: 14183271.7
(22) Date of filing: 02.09.2014
(51) Int. Cl.: H04L 12/803, H04L 29/08, H04L 12/70

(54) **Relay server load balancing and placement using in-band signaling**
Relaisserverlastausgleich und Platzierung über bandinterne Signalisierung
Équilibrage de charge de serveur relais et positionnement en utilisant une signalisation intrabande

(30) Priority: 05.09.2013 US 201314019011
(43) Date of publication of application: 11.03.2015
(73) Proprietor: Cisco Technology, Inc., San Jose, CA 95134-1706 (US)
(72) Inventor: Martinsen, Pål-Erik S., N-1430 Ås (NO); Patil, Prashanth, 560038 Bangalore (IN)
(74) Representative: Clark, Jane Anne

(56) References cited:
- WO-A1-2012/059749
- US-A1- 2011 289 221
- US-B1- 7 512 702

## Description

The present disclosure relates to optimize network traffic for client devices.

In typical network environments, routers may be deployed to enable client devices to communicate with each other. Network users may utilize the client devices and the routers to exchange communications (e.g., data) with each other across large distances. Often, client devices may be part of a larger enterprise network, and these client devices may have address information that is inaccessible by devices residing outside of the enterprise network. Network address translator devices can be deployed in networks to translate the address information of the network devices to a public address accessible by devices outside of the network.

US 7512702 describes a method and apparatus providing highly scalable server load balancing. Data packets from a client are routed through one or more routers to a server load balancer, which is selected from among a plurality of server load balancers in a network. In response to receiving a request packet, a particular server site to process the client request is selected.

WO 2012/059749 describes a relay system that has a router and multiple relay servers with specific network addresses on a first network.

Aspects and examples of the present invention are set out in the appended claims.

### BRIEF DESCRIPTION OF THE DRAWINGS

FIG. 1 is a block diagram of an example system or network topology that includes an over-the-top internet service provider with a plurality of router devices that may be designated as relay servers to enable communications between client devices.
FIG. 2 shows an example diagram of messages exchanged between client devices and a relay server in a data path with routers configured to add identifier information to the messages.
FIG. 3 shows an example flow chart depicting operations performed by a router device in the network to insert the identifier information in the messages exchanged between the client device and the relay server.
FIG. 4 shows an example flow chart depicting operations performed by the relay server to evaluate the identifier information inserted in the messages.
FIG. 5 shows an example block diagram of one of the router devices configured to insert the identifier information.
FIG. 6 shows an example block diagram of the relay server configured to evaluate the identifier information.

### DESCRIPTION OF EXAMPLE EMBODIMENTS

### Overview

Techniques are provided for optimizing network traffic flow between client devices in a network. In one embodiment, an allocate request message is received at a router device in the network. The allocate request message originates from a client device and is destined for a relay server in the network. The allocate request message requests a public identifier from the relay server for a client device. The router device inserts in the allocate request message identifier information that indicates an identity of the router device. The allocate request message is sent with the identifier information along a data path destined for the relay server.

In another embodiment, a server device configured to operate as a relay server in the network receives the allocate request message originating from the client device in the network. The server device obtains from the allocate request message the identifier information inserted by one or more router devices in a network path between the client device and the relay server. Based on the identifier information, the server device selects a particular router device in the network path to operate as a newly designated relay server for the client device. The server device sends to the client device an alternate server response message. The alternate server response message indicates to the client device that the particular router device is selected as the newly designated relay server.

### Example Embodiments

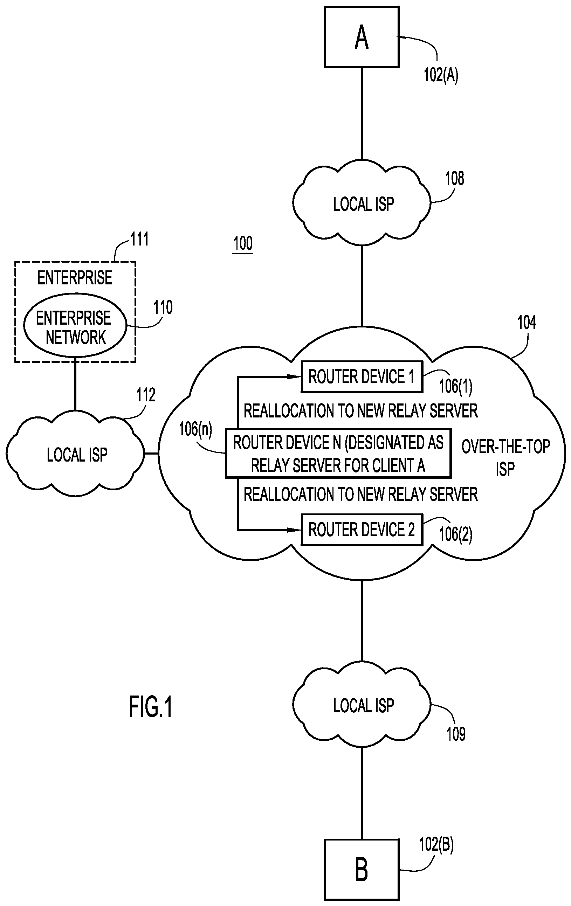

The techniques presented herein involve optimizing communications between client devices in a network by selecting and designating appropriate relay servers for the client devices. An example network system/topology (hereinafter "network") is shown at reference numeral 100 in FIG. 1. The network 100 in FIG. 1 shows two client devices at reference numerals 102(A) and 102(B). Client device 102(A) is referred to hereinafter as "client device A" or "client A" and client device 102(B) is referred to hereinafter as "client device B" or "client B." Client A and client B may be network devices that are configured to send and receive communications (e.g., audio, video and other data) in the network 100. For example, client device A and client device B may be desktop computers, laptops, mobile devices, tablets, etc. It should be appreciated that any number of client devices may be present in the network 100.

FIG. 1 also shows an Over-The-Top (OTT) Internet Service Provide (ISP) at reference numeral 104. The OTT ISP 104 may utilize a network of router devices ("routers") in a Wide Area Network (WAN) (e.g., the Internet) to distribute communications between client devices in the network 100. The routers of the OTT ISP 104 are shown generally at reference numerals 106(1)-106(n). For example, router device 1 ("router 1") is shown at reference numeral 106(1), router device 2 ("router 2") is shown at reference numeral 106(2) and router device N ("router N") is shown at reference numeral 106(n). The routers 106(1)-106(n) are network router devices provisioned to perform the optimization techniques described herein. The routers 106(1)-106(n) may also be referred to as Point of Presence (PoP) devices.

As shown in FIG. 1, router 106(n) is designated as a relay server. The relay server designation/classification enables certain network devices to exchange communications with each other in the network 100, as described herein. The designation of a router as a relay server for these network devices can change, and the techniques for designating and reclassifying routers as a relay server are described herein.

The OTT ISP 104 provides services over the Internet and enables client devices to select alternate distribution channels in order to exchange communications with each other. Thus, the OTT ISP 104 may be viewed as a WAN. The OTT ISP 104 is called an "over-the-top" ISP because it enables broadband delivery of communications without a network system operator involved in the content distribution. That is, the OTT ISP 104 utilizes infrastructure of, e.g., the Internet, to enable content delivery between client devices. For example, client A may exchange communications with client B across the OTT ISP 104 via a connection to a local ISP. Likewise, client B may exchange communications with client A across the OTT ISP 104 via a connection to a local ISP. The ISP local to client A is shown at reference numeral 108, and the ISP local to client B is shown at reference numeral 109. These local ISPs may utilize routers and other network devices in a Local Area Network (LAN) to connect to the WAN represented by the OTT ISP 104 (e.g., the Internet).

FIG. 1 also shows an enterprise network 110. The enterprise network 110 in FIG. 1 is part of an enterprise, shown at reference numeral 111. The enterprise network 110 may be, e.g., a private network of client devices associated with the enterprise 111. Multiple client devices may reside within the enterprise network 110. The client devices in the enterprise network 110 may also exchange communications with each other and with other client devices in the network 100 across the OTT ISP 104 via a local ISP connection. The ISP local to the enterprise network 110 is shown at reference numeral 112. The local ISP 112 may be a LAN configured to connect to the OTT ISP 104.

In FIG. 1, it is assumed, for example purposes, that client A is part of the enterprise network 110, even though client A may be located remotely with respect to the enterprise network 110. It is also assumed, for simplicity, that client B is not part of the enterprise network 110, though this is merely an example. Since client A is part of the enterprise network 110, it is part of a private network represented by the enterprise network 110, even though it is located remote from the enterprise network 110. For example, an employee associated with the enterprise 111 (e.g., an employee of a business) may travel to a location distant from the enterprise 111 itself, and may utilize client A to exchange communications with client B. In one example, the enterprise network 110 may be located in New York City, while the employee using client A may have traveled to London and a user using client B may be located in Paris. Client A and B may then attempt to exchange in-band, Voice over Internet Protocol (VoIP) communications. The techniques described herein optimize these communications between client A and client B.

Since client A is part of the enterprise network 110, it will use the infrastructure (e.g., servers, routers, etc.) internal to the enterprise network 110, in additional to the infrastructure of the local ISP 108 and the OTT ISP 104, to communicate with client B. The enterprise network 110 itself has a network address translator (NAT) device (not shown in FIG. 1), and thus the devices in the enterprise network 110 (e.g., client A) is said to reside "behind" the NAT. The NAT may also be a "firewall device" or "firewall." NAT devices are typically deployed in a network to allow multiple client devices to share a single public address. For example, client devices may be arranged in one or more private network, as is the case with client A and other client device associated with the enterprise network 110. Thus, the client devices in the enterprise network 110 may each have a private Internet Protocol (IP) address (e.g., as defined in the Internet Engineering Task Force (IETF) Request for Comments (RFC) 1918) that may be used only for communications within the private network (within the enterprise network 110). These private IP addresses may be unroutable outside of the private network (e.g., since the private IP addresses are not unique), and thus, these private IP addresses may not be routable on the public Internet. The private IP addresses may be mapped to a single public IP address that is assigned to and associated with a NAT device of the private network. As a result, the private network of the enterprise network 110 may have a single public IP address (assigned to the NAT device) and client A may have a private IP address.

The NAT device is configured to map or "translate" its public IP address to the private IP address associated with client A. However, the presence of the NAT device in a private network may result in only one way communications from client A within the private network of the enterprise 110 to devices outside of the private network, since devices outside of the enterprise 110 (e.g., client B) cannot route the individual private IP addresses associated with client A. In order to enable bidirectional communications between client A and client B, NAT device traversal techniques are required.

Several solutions, however, alleviate these problems. One solution involves eliminating NAT devices entirely and assigning public IP addresses to each client device. This solution, however, may be undesirable or problematic due to limitations in the availability of IP address assignments. Another solution uses dedicated IP tunneling techniques or public forwarding services to avoid the use of NAT devices for communications between client devices.

Other techniques include implementing communication protocols to accomplish NAT device traversals. For example, a Session Traversal Utilities for NATs (STUN) protocol may be used for NAT traversal. The STUN protocol is described in the Request for Comments (RFC) 3489 published by the Internet Engineering Task Force (IETF). In general, the STUN protocol involves a client device (referred to as a "STUN client") in a private network sending a binding request to a public device (referred to as a "STUN server") to receive a public IP address and/or a public port on the public device. The STUN server may be, for example, router 106(n) in FIG. 1. After receiving the binding request from the STUN client, the STUN server sends a binding response message back to the STUN client to inform the STUN client of the IP address and public port on the STUN server assigned to the STUN client.

In another protocol, called a Traversal Using Relays around NATs (TURN) protocol (described in RFC 5766), a client device (referred to as a "TURN client") in a private network sends TURN messages to a public device (referred to as a "TURN server") to allocate a public IP address and/or port on the TURN server. The TURN server (also referred to as a relay server) may be, for example, the router 106 N. Upon receiving these allocation messages, the TURN server may send a TURN allocation response message to the TURN client to inform the TURN client of the allocated public IP address and port on the TURN.

Thus, the public IP address and/or port on the relay server can be used by client A to communicate with client B. As client A "traverses the NAT" of the enterprise 110, client A is assigned a dedicated relay server with the public IP address and/or port. In FIG. 1, the dedicated relay server for client A is router 106(n). Client B may or may not have a dedicated relay server, depending on whether it is located in another private network.

Router 106(n) in FIG. 1 may have been selected as the relay server for client A due to, for example, its proximity to the enterprise network 110. In the example stated above, if the enterprise network 110 is located in New York City, router 106(n) may have been selected as the dedicated relay server for client A because of its proximity to the enterprise network 110 in New York City. However, in FIG. 1, client A is located away from the enterprise network 110 (e.g., London). Traditionally, even though client A is located away from the enterprise network 110, client A is still configured to use router 106(n) as its dedicated relay server, even though other public devices may be better suited to serve as the relay server for client A. Thus, communications between client A and client B must traverse a data path that includes router 106(n), even though router 106(n) is located far away from client A, resulting in inefficient "last mile" services provided by the local ISPs of client A and client B. The techniques described herein alleviate these problems by allowing other, more optimal, public devices (routers) in FIG. 1 to be selected as the dedicated relay server for client A. In particular, as described herein, the routers 106(1) and 106(2) in FIG. 1 are configured to insert identifier information into messages exchanged between client device A and router 106(n) that enables client device A or router 106(n) to select an optimal, newly dedicated relay server for client device A. It should be appreciated that all routers in a data path may not be able to operate as a relay server, and thus, the routers that do operate as a relay server may need to be configured as such (e.g., may need to be configured to operate as TURN servers).

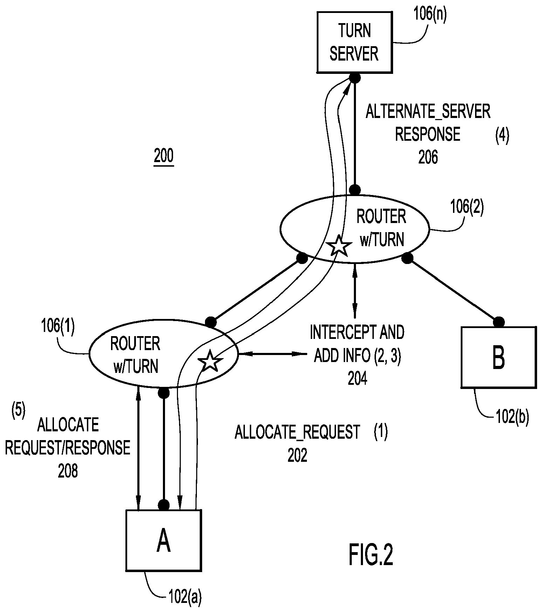

Reference is now made to FIG. 2. FIG. 2 shows an example diagram 200 of messages exchanged between client A and the relay server in the network 100. In particular, FIG. 2 shows an example of a message sequence initiated by client A to traverse a NAT of the private network of the enterprise network 110 and to obtain a public IP address/port on its dedicated relay server (e.g., router 106(n)). At reference numeral 202, client A sends an allocate request message ("Allocate_Request") that is destined for its dedicated relay server (i.e., router 106(n)). The allocate request message is sent along a data path that includes router 106(1) and router 106(2). Router 1 and router 2, upon receiving the allocate request message, each insert identifier information, as shown at reference 204. For example, the allocate request message is sent from client A to router 106(1), and router 106(1) inserts identifier information into the allocate request message. The identifier information may comprise information that indicates, e.g., the identity and location of router 1 in the network 100, along with other information that identifies the bandwidth capabilities, latency, jitter and other network processing capabilities of router 1.

The identifier information may be inserted into the allocate request message as a "via" attribute (e.g., an attribute inserted as part of a next-hop in the data path). The via attribute is used, e.g., to record a data path of an allocate request. A router that intercepts the allocate request message records its own address in the via attribute and appends it in the allocate request. This attribute is added to the bottom of the list of via attributes. In one example, the ordering of the via attributes in the allocate request message is important because it can be used to determine the closed router to the client. For example, the via attribute that is added first may correspond to the router closest to the client. The relay server may then use the via attributes to select the alternative relay server.

After inserting the identifier information in the allocate request message, router 106(1) then sends the allocate request message, with the identifier information inserted by router 106(1), to router 106(2). Router 106(2) receives the allocate request message and inserts its own identifier information in the message. Router 106(2) then sends the allocate request message to the relay server. The relay server is configured to evaluate the identifier information to determine whether or not to classify one of the routers as a newly designated relay server. For example, upon receiving the allocate request message, the relay server may identify the location of the router device that is closest to client A and may select this router as the newly designated relay server in order to reduce the last mile services required from the local ISPs. The relay server may also select a router based on other router attributes gleaned from the identifier information of each router. That is, the relay server may make "smart" networking decisions to select the router that is best prepared to handle network communications of client A based on, e.g., bandwidth, latency and other processing characteristics. For example, the relay server may utilize an algorithm to select the newly designated relay server. The relay server may also verify the authenticity of the identifier information itself. Since the allocate request message may reach the relay server via one or more public routers, the relay server may want to ensure that only authorized routers have inserted identifier information into the allocate request message and that only authorized/valid routers can potentially be selected as newly designated relay servers.

For simplicity, it is assumed that the relay server selects router 106(1) as the newly designated relay server. As stated above, this selection may be made based on location information obtained from the identifier information of router 106(1). It should be appreciated that in one embodiment, the relay server may also provide client A with the identifier information to enable client A itself to select a newly designated relay server for itself or to change the selection of the newly designated relay server made by the relay server (e.g., to select a newly designated relay server that is different from that selected by router 106(n)).

Assuming that the relay server selects router 106(1) as the newly designated relay server, at operation 206, the relay server sends an alternate server response message ("alternate_server response") to client A via router 106(2) and router 106(1). The alternate server response message may contain an attribute that, upon receipt by client A, indicates to the client that router 106(1) is now the dedicated relay server for client A. The alternate server response message may also provide client A with the identifier information provided to the relay servers by the routers in order to enable client A to make the selection of the newly designated relay server by itself. At 208, client A requests a public IP address and/or port assignment from the newly assigned relay server (router 106(1)). Upon receiving this assignment, client A can then initiate communications with client B (e.g., VoIP communications).

It should be appreciated that once a newly designated relay server has been selected, router 106(n) no longer operates as a relay server for client A for the network session. That is, the newly designated relay server (router 106(1), for example) is now responsible for providing client A with a public IP address/port assignment to enable client A to traverse the NAT of the enterprise network 110 and to communicate bidirectionally with client B (e.g., to exchange VoIP communications) over the OTV ISP 104 and the local ISPs 108 and 109. If the network session ends, however (e.g., if there is a disruption in the communications between client A and client B), router 106(n) will revert to being the dedicated relay server for client A, and the process in FIG. 2 is restarted for any new network sessions.

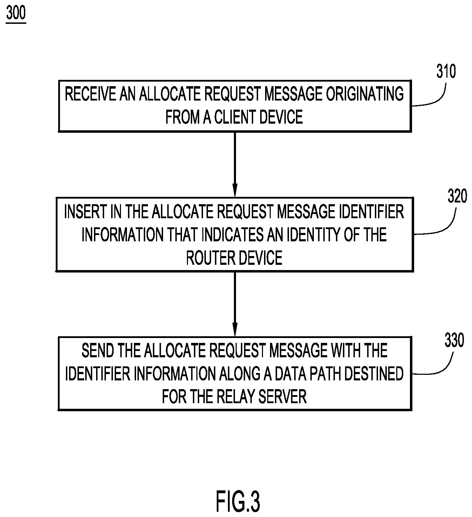

Reference is now made to FIG. 3. FIG. 3 shows an example flow chart 300 depicting operations performed by a router device in the network to insert the identifier information in the allocate request message. At operation 310, the router device receives an allocate request message originating from a client device. The allocate request message is destined for a relay server in the network 100 and requests a public identifier (e.g., public IP address and/or port assignment) from the relay server. At 320, the router device inserts in the allocate request message identifier information that indicates an identity of the router device. At 330, the router device sends the allocate request message with the identifier information along a data path destined for the relay server.

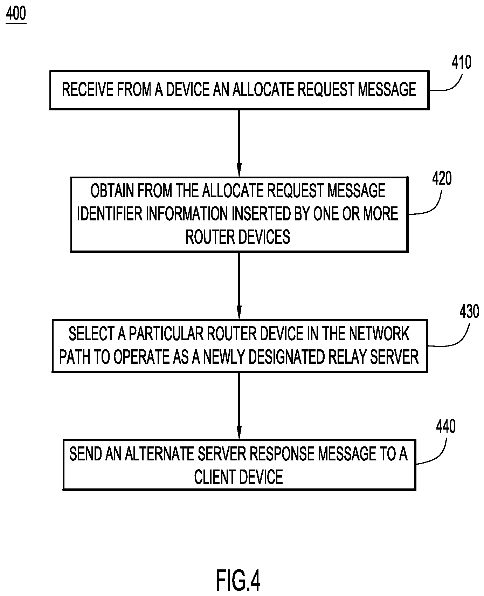

Reference is now made to FIG. 4, which shows an example flow chart 400 depicting operations performed by the dedicated relay server. At operation 410, the relay server receives from a device in the network 100 an allocate request message originating from a client device. The relay server, at 420, obtains identifier information inserted by one or more router devices in a network path between the client device and the relay server. At 430, based on the identifier information, the relay server selects a particular router device in the network path to operate as a newly designated relay server for the client device. At 440, the relay server sends to the client device an alternate server response message. The alternate server response message indicates to the client device that the particular router device is selected as the newly designated relay server (e.g., to take the place of the dedicated relay server for a particular network session).

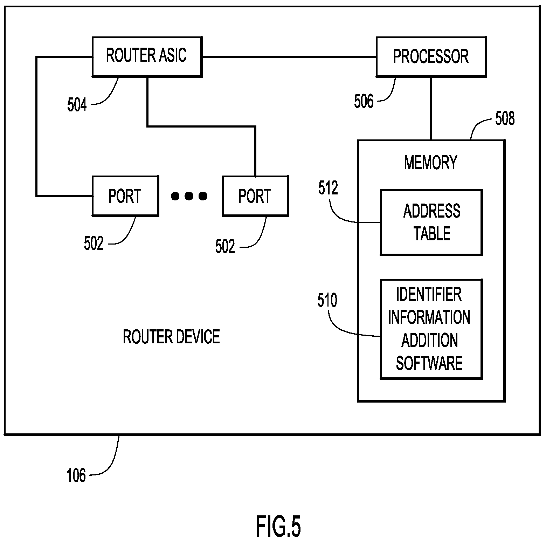

Reference is now made to FIG. 5, which shows an example block diagram 106 of a router device configured to insert identifier information in an allocate request message. It should be appreciated that FIG. 5 refers to the router device generally at reference numeral 106, but it should be appreciated that the router device 106 in FIG. 5 may be router device 106(1) or 106(2) (e.g., a router that is not a designated relay server). The router device 106 has a plurality of ports 502, a router Application Specific Integrated Circuit (ASIC) 504, a processor 506 and memory 508. The ports 502 are configured to send and receive data communications (e.g., the allocate request message and the alternate server response message) to and from devices in the network 100, under control of the router ASIC 504. The router ASIC 504 is configured to route these data communications to the appropriate devices at the instruction of the processor 506. The router ASIC 504 is coupled to the processor 506. The processor 506 is, for example, a microprocessor or microcontroller that is configured to execute program logic instructions (i.e., software) for carrying out various operations and tasks of the router device 106, as described herein. For example, the processor 506 is configured to execute identifier information addition software 510 stored in memory 508 to insert the identifier information allocate request messages. The functions of the processor 506 may be implemented by logic encoded in one or more tangible computer readable storage media or devices (e.g., storage devices compact discs, digital video discs, flash memory drives, etc. and embedded logic such as an application specific integrated circuit, digital signal processor instructions, software that is executed by a processor, etc.).

The memory 508 may comprise read only memory (ROM), random access memory (RAM), magnetic disk storage media devices, optical storage media devices, flash memory devices, electrical, optical, or other physical/tangible (non-transitory) memory storage devices. The memory 508 stores software instructions for the identifier information addition software 510. The memory 508 also stores an address table 512 that lists address assignments for the network devices. Thus, in general, the memory 508 may comprise one or more computer readable storage media (e.g., a memory storage device) encoded with software comprising computer executable instructions and when the software is executed (e.g., by the processor 206) it is operable to perform the operations described for the identifier information addition software 510.

The identifier information addition software 510 may take any of a variety of forms, so as to be encoded in one or more tangible computer readable memory media or storage device for execution, such as fixed logic or programmable logic (e.g., software/computer instructions executed by a processor), and the processor 506 may be an application specific integrated circuit (ASIC) that comprises fixed digital logic, or a combination thereof.

For example, the processor 506 may be embodied by digital logic gates in a fixed or programmable digital logic integrated circuit, which digital logic gates are configured to perform the identifier information addition software 510. In general, the identifier information addition software 510 may be embodied in one or more computer readable storage media encoded with software comprising computer executable instructions and when the software is executed operable to perform the operations described hereinafter.

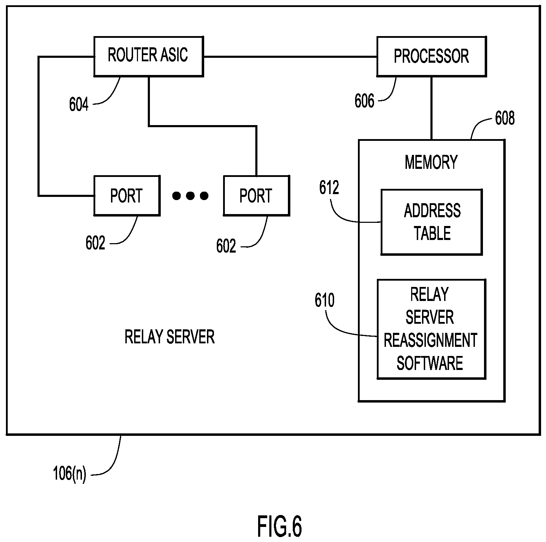

Reference is now made to FIG. 6. FIG. 6 shows an example block diagram of the relay server dedicated to client A. The relay server is shown at reference numeral 106(n) corresponding to router 106(n) shown in FIGs. 1 and 2, but it should be appreciated that this is merely an example. The relay server 106(n) comprises a plurality of ports 602, a router ASIC 604, a processor 606 and memory 609. The ports 602, router ASIC 604, processor 606 and memory 608 are similar in form to the corresponding components described in connection with FIG. 5. The memory 608 has relay server reassignment software 610 that is configured to enable the relay server 106(n) to select a router as a newly designated relay server, as described by the techniques herein. The memory 608 also has an address table 612 that is similar to the address table described in connection with FIG. 5.

It should be appreciated that the techniques described above in connection with all embodiments may be performed by one or more computer readable storage media that is encoded with software comprising computer executable instructions to perform the methods and steps described herein. For example, the operations performed by the client devices 102(1) and 102(2) and the routers 106(1)-106(n) (including the dedicated relay server 106(n)) may be performed by one or more computer or machine readable storage media (non-transitory) or device executed by a processor and comprising software, hardware or a combination of software and hardware to perform the techniques described herein.

In summary, a method is provide comprising: at a device configured to operate as a relay server in a network, receiving from a device in the network an allocate request message originating from a client device in the network; obtaining from the allocate request message identifier information inserted by one or more router devices in a network path between the client device and the relay server; based on the identifier information, selecting a particular router device in the network path to operate as a newly designated relay server for the client device; and sending to the client device an alternate server response message, wherein the alternate server response message indicates to the client device that the particular router device is selected as the newly designated relay server.

In addition, one or more computer readable storage media encoded with software is provided comprising computer executable instructions and when the software is executed operable to: receive from a device in a network an allocate request message originating from a client device in the network; obtain from the allocate request message identifier information inserted by one or more router devices in a network path between the client device and a relay server; based on the identifier information, select a particular router device in the network path to operate as a newly designated relay server for the client device; and send to the client device an alternate server response message, wherein the alternate server response message indicates to the client device that the particular router device is selected as the newly designated relay server.

Furthermore, an apparatus is provided comprising: a plurality of ports; a memory; and a processor coupled to the ports and the memory, and further configured to: receive from a device in a network an allocate request message originating from a client device in the network; obtain from the allocate request message identifier information inserted by one or more router devices in a network path between the client device and a relay server; based on the identifier information, select a particular router device in the network path to operate as a newly designated relay server for the client device; and send to the client device an alternate server response message, wherein the alternate server response message indicates to the client device that the particular router device is selected as the newly designated relay server.

Additionally, a method is provided comprising: at a router device in a network, receiving an allocate request message originating from a client device, wherein the allocate request message is destined for a relay server in the network and requests a public identifier from the relay server for the client device; inserting in the allocate request message identifier information that indicates an identity of the router device; and sending the allocate request message with the identifier information along a data path destined for the relay server.

In one embodiment, techniques are provided for optimizing a choice of relay servers for optimizing network traffic flow between peer devices in a network. An allocate request message is received from a router device in a network and is destined for a relay server in the network. The message requests a public identifier from the relay server for the client device. Identifier information is inserted in the message that indicates an identity of the router device. A server device configured to operate as a relay server in the network receives the allocate request message. Based on the identifier information, the server device selects a particular router device in the network path to operate as a newly designated relay server for the client device. The server device sends to the client device an alternate server response message that indicates that the particular router device is selected as the newly designated relay server.

The above description is intended by way of example only. Various modifications and structural changes may be made therein without departing from the scope of the concepts described herein and within the scope and range of equivalents of the claims.

## Claims

1. A method comprising:
at a device (106) configured to operate as a relay server in a network (100), receiving (410) from a device in the network an allocate request message originating from a client device in the network;
obtaining (420) from the allocate request message identifier information inserted by one or more router devices in a network path between the client device and the relay server;
based on the identifier information, selecting (430) a particular router device in the network path to operate as a newly designated relay server for the client device; and
sending (440) to the client device an alternate server response message, wherein the alternate server response message indicates to the client device that the particular router device is selected as the newly designated relay server.

2. The method of claim 1, wherein the relay server is configured to operate a Traversal Using Relays around Network Address Translator (TURN) protocol.

3. The method of claim 1 or 2, wherein selecting comprises selecting a router device closest to the client device as the newly designated relay server based on location information obtained from the identifier information.

4. The method of claim 1 or 2, wherein selecting comprises selecting a router device as the newly designated relay server based on bandwidth and latency information obtained from the identifier information.

5. The method of any preceding claim, wherein sending comprises sending to the client device the alternate response message with the identifier information for one or more router devices.

6. The method of claim 5, wherein selecting comprises selecting a particular router device in the network that is different from the relay server.

7. The method of any preceding claim, further comprising verifying authenticity of the identifier information for each of the one or more router devices in the network path.

8. The method of any preceding claim, wherein selecting comprises selecting the particular router device as the newly designated relay server in response to the server device verifying authenticity of the identifier information for the particular router device.

9. The method of any preceding claim, wherein obtaining comprises obtaining the identifier information from an attribute inserted by one or more router devices in the allocate request message.

10. One or more computer readable storage media encoded with software comprising computer executable instructions and when the software is executed operable to carry out the method of any preceding claim.

11. An apparatus (106) comprising:
a plurality of ports configured to receive and send messages in a network (100); and
a processor coupled to the ports, and configured to:
receive (410) from a device in the network an allocate request message originating from a client device in the network;
obtain (420) from the allocate request message identifier information inserted by one or more router devices in a network path between the client device and a relay server;
based (430) on the identifier information, select a particular router device in the network path to operate as a newly designated relay server for the client device; and
send (440) to the client device an alternate server response message, wherein the alternate server response message indicates to the client device that the particular router device is selected as the newly designated relay server.

12. The apparatus of claim 11, wherein the processor is further configured to select a router device closest to the client device as the newly designated relay server based on location information obtained from the identifier information.

13. The apparatus of claim 11, wherein the processor is further configured to select a router device as the newly designated relay server based on bandwidth and latency information obtained from the identifier information.

14. The apparatus of claim 11, 12 or 13, wherein the processor is further configured to send to the client device the alternate response message with the identifier information for one or more router devices to cause the client device to select a router device different from the particular router device as the newly designated relay server.

15. The apparatus of claim 14, wherein the processor is further configured to verify authenticity of the identifier information for each of the one or more router devices in the network path.

## Patentansprüche

1. Verfahren, das Folgendes umfasst:
an einer Vorrichtung (106), die so konfiguriert ist, dass sie als ein Relaisserver in einem Netzwerk (100) arbeitet, Empfangen (410) von einer Vorrichtung in dem Netzwerk einer Zuweisungsanforderungsnachricht, die von einer Clientvorrichtung in dem Netzwerk stammt;
Erhalten (420) von Kennungsinformationen von der Zuweisungsanforderungsnachricht, die von einer oder mehreren Routervorrichtungen in einem Netzwerkpfad zwischen der Clientvorrichtung und dem Relayserver eingefügt wurden;
basierend auf den Kennungsinformationen, Auswählen (430) einer bestimmten Routervorrichtung in dem Netzwerkpfad, um als neu bezeichneter Relayserver für die Clientvorrichtung zu arbeiten; und
Senden (440) einer alternativen Serverantwortnachricht zu der Clientvorrichtung, wobei die alternative Serverantwortnachricht der Clientvorrichtung anzeigt, dass das bestimmte Routervorrichtung als neu bezeichneter Relayserver ausgewählt ist.

2. Verfahren nach Anspruch 1, wobei der Relayserver so konfiguriert ist, dass er ein Protokoll der Transversierung unter Verwendung von Relays um Netzwerkadressenübersetzer (Traversal Using Relays around Network Address Translator (TURN)) betreibt.

3. Verfahren nach Anspruch 1 oder 2, wobei das Auswählen das Auswählen einer Routervorrichtung, die der Clientvorrichtung am nächsten liegt, als neu bezeichneten Relayserver basierend auf Standortinformationen, die aus den Kennungsinformationen erhalten wurden, umfasst.

4. Verfahren nach Anspruch 1 oder 2, wobei das Auswählen das Auswählen einer Routervorrichtung als neu bezeichneten Relayserver basierend auf Bandbreiten- und Latenzinformationen, die aus den Kennungsinformationen erhalten wurden, umfasst.

5. Verfahren nach einem der vorhergehenden Ansprüche, wobei das Senden das Senden der alternativen Antwortnachricht zu der Clientvorrichtung mit den Kennungsinformationen für eine oder mehrere Routervorrichtungen umfasst.

6. Verfahren nach Anspruch 5, wobei das Auswählen das Auswählen einer bestimmten Routervorrichtung in dem Netzwerk umfasst, die sich von dem Relaisserver unterscheidet.

7. Verfahren nach einem der vorhergehenden Ansprüche, das ferner das Verifizieren der Authentizität der Kennungsinformationen für jede der einen oder mehreren Routervorrichtungen in dem Netzwerkpfad umfasst.

8. Verfahren nach einem der vorhergehenden Ansprüche, wobei das Auswählen das Auswählen der bestimmten Routervorrichtung als neu bezeichneten Relaisserver als Reaktion darauf umfasst, dass die Servervorrichtung die Authentizität der Kennungsinformationen für die bestimmte Routervorrichtung verifiziert.

9. Verfahren nach einem der vorhergehenden Ansprüche, wobei das Erhalten das Erhalten der Kennungsinformationen von einem Attribut umfasst, das durch eine oder mehrere Routervorrichtungen in die Zuweisungsanforderungsnachricht eingefügt wird.

10. Ein oder mehrere computerlesbare Speichermedien, die mit Software kodiert sind, die computerausführbare Befehle umfasst, und wenn die Software ausgeführt wird, das Verfahren nach einem der vorhergehenden Ansprüche durchführt.

11. Vorrichtung (106), die Folgendes umfasst:
eine Vielzahl von Anschlüssen, die dafür konfiguriert sind, Nachrichten in einem Netzwerk (100) zu empfangen und zu senden; und
einen Prozessor, der mit den Anschlüssen gekoppelt ist und für Folgendes konfiguriert ist:
Empfangen (410) von einer Vorrichtung in dem Netzwerk einer Zuweisungsanforderungsnachricht, die von einer Clientvorrichtung in dem Netzwerk stammt;
Erhalten (420) von Kennungsinformationen von der Zuweisungsanforderungsnachricht, die von einer oder mehreren Routervorrichtungen in einem Netzwerkpfad zwischen der Clientvorrichtung und einem Relayserver eingefügt wurden;
basierend (430) auf den Kennungsinformationen, Auswählen einer bestimmten Routervorrichtung in dem Netzwerkpfad, um als neu bezeichneter Relayserver für die Clientvorrichtung zu arbeiten; und
Senden (440) einer alternativen Serverantwortnachricht zu der Clientvorrichtung, wobei die alternative Serverantwortnachricht der Clientvorrichtung anzeigt, dass das bestimmte Routervorrichtung als neu bezeichneter Relayserver ausgewählt ist.

12. Vorrichtung nach Anspruch 11, wobei der Prozessor ferner dafür konfiguriert ist, eine Routervorrichtung, die der Clientvorrichtung am nächsten liegt, als neu bezeichneten Relayserver basierend auf Standortinformationen, die aus den Kennungsinformationen erhalten wurden, auszuwählen.

13. Vorrichtung nach Anspruch 11, wobei der Prozessor ferner dafür konfiguriert ist, eine Routervorrichtung als neu bezeichneten Relayserver basierend auf Bandbreiten- und Latenzinformationen, die aus den Kennungsinformationen erhalten wurden, auszuwählen.

14. Vorrichtung nach Anspruch 11, 12 oder 13, wobei der Prozessor ferner dafür konfiguriert ist, die alternative Antwortnachricht mit den Kennungsinformationen für eine oder mehrere Routervorrichtungen zu der Clientvorrichtung zu senden, um die Clientvorrichtung zu veranlassen, eine Routervorrichtung, die sich von der bestimmten Routervorrichtung unterscheidet, als neu bezeichneten Relayserver auszuwählen.

15. Vorrichtung nach Anspruch 14, wobei der Prozessor ferner dafür konfiguriert ist, die Authentizität der Kennunginformationen für jede der einen oder mehreren Routervorrichtungen in dem Netzwerkpfad zu verifizieren.

## Revendications

1. Procédé comprenant :
au niveau d'un dispositif (106) configuré pour fonctionner en tant que serveur relais dans un réseau (100), la réception (410) depuis un dispositif dans le réseau d'un message de requête d'allocation provenant d'un dispositif client dans le réseau ;
l'obtention (420) à partir du message de requête d'allocation d'informations d'identifiant insérées par un ou plusieurs dispositifs routeurs dans un chemin de réseau entre le dispositif client et le serveur relais ;
en fonction des informations d'identifiant, la sélection (430) d'un dispositif routeur particulier dans le chemin de réseau pour qu'il fonctionne en tant que serveur relais nouvellement désigné pour le dispositif client ; et
l'envoi (440) au dispositif client d'un autre message de réponse de serveur, dans lequel l'autre message de réponse de serveur indique au dispositif client que le dispositif routeur particulier est sélectionné comme serveur relais nouvellement désigné.

2. Procédé selon la revendication 1, dans lequel le serveur relais est configuré pour exploiter un protocole Traversal Using Relays around Network Address Translator (TURN).

3. Procédé selon la revendication 1 ou 2, dans lequel la sélection comprend la sélection d'un dispositif routeur le plus proche du dispositif client comme serveur relais nouvellement désigné en fonction d'informations de position obtenues à partir des informations d'identifiant.

4. Procédé selon la revendication 1 ou 2, dans lequel la sélection comprend la sélection d'un dispositif routeur comme serveur relais nouvellement désigné en fonction d'informations de largeur de bande et de temps d'attente obtenues à partir des informations d'identifiant.

5. Procédé selon l'une quelconque des revendications précédentes, dans lequel l'envoi comprend l'envoi au dispositif client de l'autre message de réponse avec les informations d'identifiant d'un ou de plusieurs dispositifs routeurs.

6. Procédé selon la revendication 5, dans lequel la sélection comprend la sélection d'un dispositif routeur particulier dans le réseau qui est différent du serveur relais.

7. Procédé selon l'une quelconque des revendications précédentes, comprenant en outre la vérification de l'authenticité des informations d'identifiant de chacun des un ou plusieurs dispositifs routeurs dans le chemin de réseau.

8. Procédé selon l'une quelconque des revendications précédentes, dans lequel la sélection comprend la sélection du dispositif routeur particulier comme serveur relais nouvellement désigné en réponse à la vérification par le dispositif serveur de l'authenticité des informations d'identifiant du dispositif routeur particulier.

9. Procédé selon l'une quelconque des revendications précédentes, dans lequel l'obtention comprend l'obtention des informations d'identifiant à partir d'un attribut inséré par un ou plusieurs dispositifs routeurs dans le message de requête d'allocation.

10. Un ou plusieurs supports de mémorisation lisibles par ordinateur codés avec un logiciel comprenant des instructions exécutables par ordinateur et exploitables, quand le logiciel est exécuté, pour exécuter le procédé selon l'une quelconque des revendications précédentes.

11. Appareil (106) comprenant :
une pluralité de ports configurée pour recevoir et envoyer des messages dans un réseau (100) ; et
un processeur couplé aux ports, et configuré pour :
recevoir (410) depuis un dispositif dans le réseau un message de requête d'allocation provenant d'un dispositif client dans le réseau ;
obtenir (420) à partir du message de requête d'allocation d'informations d'identifiant insérées par un ou plusieurs dispositifs routeurs dans un chemin de réseau entre le dispositif client et un serveur relais ;
en fonction (430) des informations d'identifiant, sélectionner un dispositif routeur particulier dans le chemin de réseau pour qu'il fonctionne en tant que serveur relais nouvellement désigné pour le dispositif client ; et
envoyer (440) au dispositif client un autre message de réponse de serveur, dans lequel l'autre message de réponse de serveur indique au dispositif client que le dispositif routeur particulier est sélectionné comme serveur relais nouvellement désigné.

12. Appareil selon la revendication 11, dans lequel le processeur est configuré en outre pour sélectionner un dispositif routeur le plus proche du dispositif client comme serveur relais nouvellement désigné en fonction d'informations de position obtenues à partir des informations d'identifiant.

13. Appareil selon la revendication 11, dans lequel le processeur est configuré en outre pour sélectionner un dispositif routeur comme serveur relais nouvellement désigné en fonction d'informations de largeur de bande et de temps d'attente obtenues à partir des informations d'identifiant.

14. Appareil selon la revendication 11, 12 ou 13, dans lequel le processeur est configuré en outre pour envoyer au dispositif client l'autre message de réponse avec les informations d'identifiant d'un ou de plusieurs dispositifs routeurs pour faire en sorte que le dispositif client sélectionne un dispositif routeur différent du dispositif routeur particulier comme serveur relais nouvellement désigné.

15. Appareil selon la revendication 14, dans lequel le processeur est configuré en outre pour vérifier l'authenticité des informations d'identifiant de chacun des un ou plusieurs dispositifs routeurs dans le chemin de réseau.
